# EUROPEAN PATENT SPECIFICATION

(11) **EP 3 609 642 B1**
(45) Date of publication and mention of the grant of the patent: **13.01.2021**
(21) Application number: 18720791.5
(22) Date of filing: 11.04.2018
(51) Int. Cl.: B22F 3/105, B33Y 10/00, B33Y 30/00, B29C 64/295, B29C 64/153

(54) **APPARATUS FOR PRE- AND/OR POST-HEATING METAL POWDERS IN AN ADDITIVE MANUFACTURING PROCESS AND ADDITIVE MANUFACTURING PROCESS**
VORRICHTUNG ZUM VOR- UND/ODER NACHERHITZEN VON METALLPULVERN IN EINEM VERFAHREN DER GENERATIVEN FERTIGUNG UND GENERATIVES VERTIGUNGSVERFAHREN
APPAREIL POUR PRÉCHAUFFER ET/OU POST-CHAUFFER DES POUDRES MÉTALLIQUES DANS UN PROCÉDÉ DE FABRICATION ADDITIVE ET PROCÉDÉ DE FABRICATION ADDITIVE

(30) Priority: 13.04.2017 IT 201700041694
(43) Date of publication of application: 19.02.2020
(73) Proprietor: 3D New Technologies S.r.l., 38068 Rovereto (TN) (IT)
(72) Inventor: FERRARIO, Fabio, 10247 Berlino (DE)
(74) Representative: Metroconsult Srl
(86) International application number: PCT/IB2018/052547
(87) International publication number: WO 2018/189701

(56) References cited:
- WO-A1-2014/094882
- DE-A1-102015 006 533
- US-A- 4 089 047
- US-A- 5 142 387
- US-A1- 2014 314 613
- US-A1- 2016 243 619

## Description

The present invention relates to a pre- and/or post-heating apparatus for additive manufacturing and to a method of use thereof.

The term *additive manufacturing* refers to a process wherein three-dimensional design data are used for manufacturing a component by progressively laying multiple layers of material.

Additive manufacturing is a production technique that is distinct from conventional methods based on material removal: instead of producing a semifinished product by starting from a solid block or by filling a mould in a single step, as is typical in foundries, components are built layer by layer starting from materials available as fine powder. Different types of materials can be used, in particular metals, plastics or composite components.

The process is started by laying a thin layer of powder material onto a work platform (bed). A laser beam is then used in order to melt the powder exactly in predefined locations according to the component design data. The platform is then usually lowered and another layer of powder is applied, and the material is melted again in order to bind it to the underlying layer in the predefined locations.

The energy absorption properties of the material include density, thermal conductivity, specific heat and emissivity. These properties do not have constant values, but change with the temperature of the material itself. In particular, according to an additive manufacturing technique called *selective laser sintering*/*melting,* thermal capacity (the product of specific heat by the temperature difference between ambient temperature and melting temperature) can widely affect the process.

In addition to the above, it must be reminded that the quality of the manufactured parts is strongly dependent on the choice of the process parameters, such as laser power, laser scanning speed on the powder bed, shape of the laser beam, and material in use. Pre-heating the powder bed immediately before the laser melting process can lead to faster execution time and less strains occurring during the hardening phase.

The properties of the material are therefore affected by the high thermal gradient in space and time resulting from the use of a laser beam in the melting process; therefore, proper control over the temperature of the product is essential to obtain high-quality products.

Several measures are adopted in additive manufacturing apparatuses for pre-heating the material bed in order to reduce the thermal gradients.

International patent application no. WO 2016/051163 A1 discloses the use of microwave or radio wave sources provided with parabolic or cylindrical reflectors for pre-heating the material near to or to the limit of the melting temperature.

International patent application no. WO 2014/094882 A1 uses an incoherent light source fitted with mirrors or lenses, which can melt the material during the deposition. In additive manufacturing processes, in order to limit the area irradiated by sources of coherent and incoherent light and locally increase its intensity, imaging-type reflectors and/or concentrators known in the art can be used (Fresnel lenses, parabolic and/or elliptic and/or cylindrical units). Such light sources emit light in all directions, and therefore not all light rays are exploited when using these types of reflectors.

DE 10 2015 006533 A1 discloses a method and a device for producing three-dimensional models by means of a layer construction technology in the high speed sintering method. At present, no method has been developed for additive manufacturing processes which can optimize the energy emitted by the light source without energy losses while optimizing the energy absorbed by the material.

It is therefore the object of the present invention to propose an apparatus for pre- or post-heating metal powders in an additive manufacturing process which includes at least one illuminator and one or more reflectors capable of optimizing the energy directed towards the powder bed, resulting in reduced energy losses.

The additive manufacturing process can be optimized by adding some sources of coherent, or preferably incoherent, light to the laser system used for melting the powder, which sources are adapted to pre-heat and possibly post-heat the powder bed before and after melting.

The present invention solves the above mentioned problems by providing an apparatus according to claim 1 and a method according to claim 3.

For the purpose of concentrating all the luminous energy of the sources on the area to be heated, further measures can advantageously be taken in order to recover the energy that would otherwise be lost.

According to one embodiment of the disclosure, non-imaging optics reflectors, or concentrators, are used, e.g. of the Compound Elliptical Concentrator (CEC) type, which can transfer luminous energy in an optimized manner between the source and the surface to be heated, and which, unlike imaging techniques, are not expected to reproduce an image of the source. This type of reflector uses the principle of marginal rays to ensure that all intermediate rays will reach the target, and is well suited to the case wherein spatial concentration and/or limitation of the luminous radiation is required.

A further embodiment of the disclosure uses at least one parabolic reflector appropriately modified by means of two additional reflectors, preferably cylindrical ones, which can direct the rays emitted by one or more illuminators towards the powder bed in order to optimize the pre- and/or post-heating and bring the powder to a temperature close to the melting temperature.

In this way it is possible to reduce the thermal gradient during the melting process and gain better temperature control, thus improving the mechanical properties of the product and increasing the overall productivity and efficiency of the process.

In both embodiments of the diclosure the light beams are advantageously concentrated evenly on the area to be pre- and/or post-heated.

This and other objects are achieved through a pre- and/or post-heating apparatus for additive manufacturing provided with at least one parabolic reflector appropriately modified in accordance with the invention and/or one CEC reflector, the characteristics of which are set out in the claims.

Particular implementations are set out in dependent claims, the contents of which should be understood as being an integral part of the present description.

Further features and advantages of the invention will be illustrated in the following detailed description, which is provided merely by way of non-limiting example with reference to the annexed drawings, wherein:
- Figure 1 shows an apparatus for additive manufacturing including one or more illuminators provided with CEC and/or parabolic reflectors;
- Figure 2 is a sectional view of a Compound Elliptical Concentrator (CEC) reflector that can be used in the apparatus of Fig. 1;
- Figure 3 is a sectional view of a parabolic reflector appropriately modified and usable in the apparatus of Fig. 1.

The structure of the apparatus itself is not subject to any restriction, since the reflectors according to the present invention can be applied to any other apparatus for additive manufacturing *per se* known in the art.

In particular, in the additive manufacturing process it is very advantageous to spatially limit the area to be fluxed to remove slag and gases of the melting process. This limitation allows increasing the flux speed without introducing any turbulence in the flux itself. In these systems, the CEC and/or appropriately modified parabolic reflector allows for a uniform and efficient spatial localization of the illuminated area.

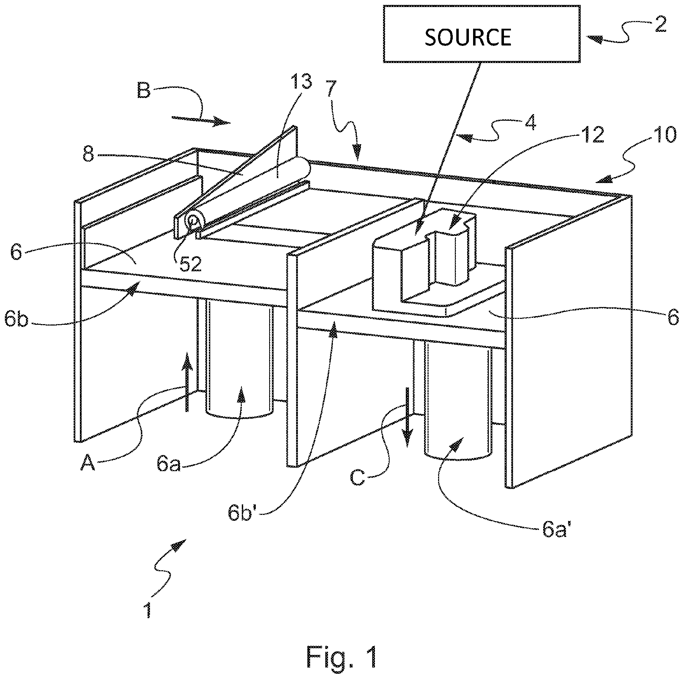

The apparatus of Figure 1 comprises a laser source, associated optics for transmitting a beam, and scanner optics, designated as a whole by reference numeral 2, which are adapted to emit a laser beam 4 directed towards a powder bed 6.

The powder bed 6 is fed by a powder dispenser piston 6a, which feeds the powder, in a feed area 7, onto a platform 6b. The dispenser piston 6a moves vertically upwards along a direction A as the powder is progressively used.

A doctor blade 8 moves transversally relative to the first platform 6b in a direction B parallel to the plane in which the powder bed 6 lies, thus moving the powder from the feed area 7 towards a working area 10, wherein the laser beam 4 progressively creates a semifinished product 12 by melting the powder layer just laid by the doctor blade 8. In the working area 10 there are also a second platform 6b', whereon the powder brought by the doctor blade 8 is laid, and a support piston 6a', which lowers vertically in a direction C as the product 12 takes shape and increases in size.

The energy required for melting the material, starting from the powder at ambient temperature, is divided into several contributions: a first contribution, the greater one, which allows increasing the temperature of the material up to the melting point; a smaller second contribution, consisting of the latent heat of fusion, and a third contribution that increases the temperature of the molten state.

The laser source 2 administers the second and third energy contributions while ensuring selectivity of the region of the product 12 to be melted.

One or more lamps, or illuminators, 52 associated with the doctor blade 8 can supply the first energy contribution.

In particular, the doctor blade 8 is provided with at least one illuminator 52 arranged in the lower part of the doctor blade 8 itself for pre-heating the powder bed 6 and/or post-heating the product 12 as it is being manufactured.

The lamps 52 are selected by ensuring that the peak of the emission spectrum of the lamps 52 will lie within the wavelength range (at a given temperature) with high values of absorption by the powder material.

For most metals, this corresponds to wavelengths of less than 1µm. The emission of most infrared radiators lies within a spectral region where absorption by metals is only marginal. Most HID (High Intensity Discharge) lamps, such as HPS lamps or metal halides, have an emission spectrum centered in the spectral region between 300 and 800 nm and are well suited for this purpose.

At least one reflector 13,13' is associated with the illuminator 52.

The energy emitted by the illuminator 52 is evenly directed towards the powder bed 6, thus minimizing energy losses. To this end, it is possible to use ceramic or aluminium reflectors with suitable dielectric layers deposited thereon.

In this manner, three distinct processing phases can be obtained, i.e. powder pre-heating, temperature maintenance during the processing, and post-heating for relaxing strains locally induced in the thin hardening layer.

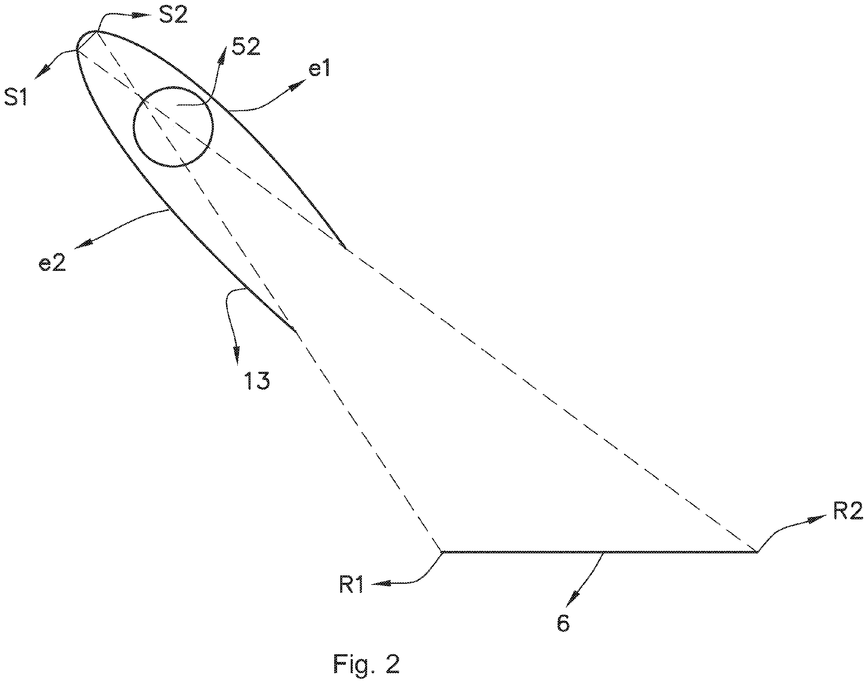

The reflector 13 may be a CEC reflector as shown in Figure 2.

The CEC reflector is composed of two ellipses e1,e2 having respective foci S1,R1 and S2,R2, which allow directing the rays of the light source 52 towards the powder bed 6 while minimizing the energy losses caused by multiple reflections of the light rays. At least one of the two foci S1,R1 or S2,R2 of the two ellipses e1,e2 coincides with respective extremes of the area of the powder bed 6 to be pre- or post-heated.

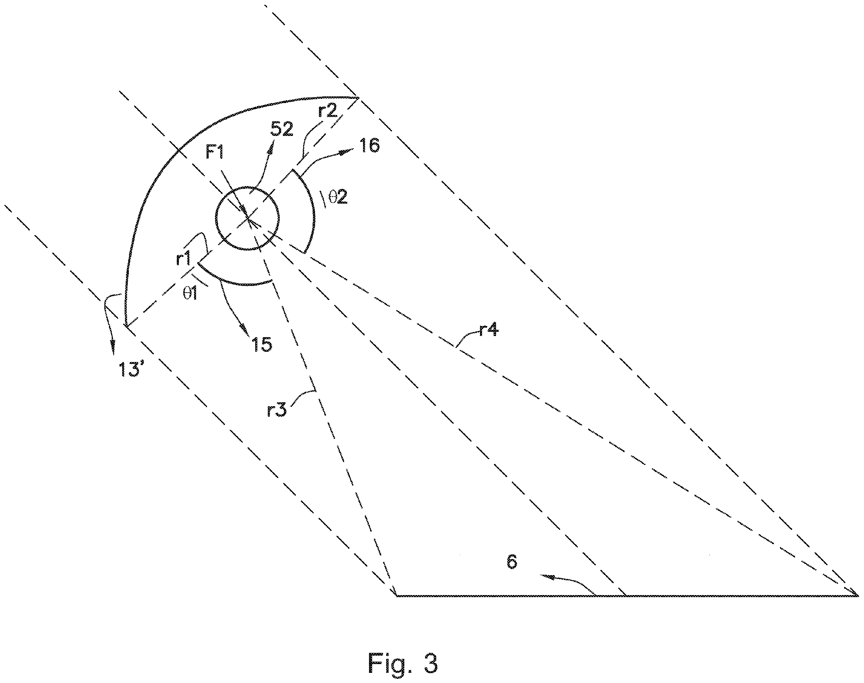

One variant of the apparatus of Figure 1 uses a parabolic reflector 13' having a focus F1, appropriately modified as illustrated in Figure 3.

The illuminator 52 emits rays in all directions. The radiation emitted within the angles θ₁,θ₂, respectively comprised between the straight lines r1,r2, passing through the focus F1 and the extremes of the parabolic reflector 13', and the straight lines r3,r4, passing through the focus F1 and the extremes of the area of the powder bed 6 to be pre- and/or post-heated, would be lost. The parabolic reflector having a focus F1 is equipped with two further reflectors 15 and 16, preferably cylindrical ones, capable of recovering the energy emitted by the illuminator 52 and subtended to the angles θ₁ and θ₂, so as to reflect and appropriately direct the light rays towards the area of the powder bed 6 to be pre- or post-heated.

The melting step is thus divided into two sub-steps:
- raising the temperature up to a value close to the melting point, by means of the lamps 52 equipped with reflectors 13,13' (pre-heating system);
- releasing the latent heat of fusion, via the laser beam 4, towards the material. The amount of energy released by the laser beam 4 for the melting step is thus smaller than in prior-art apparatuses; therefore, the power of the laser source 2 being equal, the total time of the additive manufacturing process will be considerably shorter.

The two steps can be carried out in parallel to speed up the process.

The presence of CEC and/or parabolic reflectors like those respectively illustrated in Figures 2 and 3 makes it possible to effectively concentrate the energy emitted by the lamps 52 and to quickly bring the temperature of the powder bed 6 near to the melting point, thereby increasing the productivity of the entire process.

Thus, the above-described pre- and/or post-heating system is optimized and differs from the known selective laser sintering/melting additive technologies in that the mechanical properties of the product are enhanced, induced strains are minimized, and the time of interaction between the laser radiation and the powder is reduced to a minimum, resulting in less time necessary for manufacturing the part.

The above-described pre- and/or post-heating system is very advantageous, in particular, for processing aluminium with fiber lasers emitting a typical wavelength of 1,070 nm.

In this case, the material's absorption coefficient at ambient temperature is very low, and most of the laser power is usually lost during the process. Since the absorption coefficient increases with temperature, the time needed for the phase transition is drastically reduced.

A detailed analysis of the total length of an additive manufacturing process allows identifying four times:
1. the time necessary for laying out the bed of material to be melted;
2. the time necessary for positioning the laser beam (galvanic scanner);
3. the time necessary for the material to melt;
4. the time necessary for resetting the process for processing the next layer.

Due to optimization of the phase of pre- and/or post-heating the powder bed, the temperature of the metal powder of the bed is brought to a temperature closer to the melting point. The laser beam must, in fact, only melt the underlying material; therefore, it must yield to the material volume hit by the laser radiation only as much energy as necessary for increasing its temperature up to the material's melting point, while also yielding the latent heat required for the isothermal phase transition. It is therefore apparent that such time is inversely proportional to laser power.

In this sense, the process becomes more productive, since only the latent heat of fusion ideally needs to be supplied to the material via laser radiation. In practice, the molten phase is further heated in order to improve the re-melting of the underlying layers and the properties of the product. Moreover, the pre-heating of the metal powders immediately before the laser melting process and the post-heating of the product 12 after melting, in addition to improving the productivity, also ensure better material properties and reduce the residual strains caused by fast heating and cooling of the material just melted.

The simple melting and subsequent cooling of a thin layer of powder implies, in fact, an extremely fast cooling that induces local strains, the importance of which grows with the dimensions of the cross-section of the product 12. It is in fact good practice to subject the product 12, when it is still anchored to the platform 6b (growing plate), to a thermal relaxation treatment to reduce the residual strains and ensure, after separation, that any deformations will fall within specific shape tolerances.

By keeping the product 12 at sufficiently high temperatures it is possible to:
- decrease residual hardening and cooling strains by reducing the temperature gradient;
- decrease the amount of energy to be supplied by the laser to allow the product 12 to reach, in the region of co-melting with the powder layer, the desired melting temperature.

The heat supplied by the pre-heating system ideally brings the material to the edge of phase transition, and the activity of the laser beam 4 is limited to supplying the latent heat of fusion.

The lamps 52 with the reflectors 13,13' contribute to keeping the temperature of the product 12 constant between one processing step and the next.

In one variant of the invention, the doctor blade 8 contains a powder dispenser; in this case, only the second platform 6b whereon the product 12 is made to grow will be used, instead of two distinct platforms.

Pre-heating improves the material's properties, productivity, and the efficiency of the process as a whole.

In this way it is possible, in fact, to reduce the melting time of the material and the deformations induced in the product 12, thereby obtaining a better product in less time. Of course, without prejudice to the principle of the invention, the forms of embodiment and the implementation details may be extensively varied from those described and illustrated herein by way of non-limiting example, without however departing from the protection scope of the present invention as set out in the appended claims.

## Claims

1. Apparatus for pre- and/or post-heating metal powders in an additive manufacturing process, said apparatus being provided with at least one illuminator (52) emitting light beams, having a wavelength in the range of 300 to 1,000 nm, which are directed towards a powder bed (6) so as to concentrate said light beams evenly on an area of said powder bed (6) to be pre- and/or post-heated, wherein a reflector (13) of the Compound Elliptical Concentrator (CEC) type is associated with said illuminator, which comprises two ellipses (e1,e2) having respective foci (R1,R2;S1,S2), wherein at least one of said two foci (R1,R2;S1,S2) of said ellipses (e1,e2) coincides with respective extremes of said area of said powder bed (6) to be pre- and/or post heated or wherein a reflector (13') of the parabolic type having a focus (F1) is associated with said illuminator, which is equipped with two further reflectors (15,16), preferably cylindrical ones, capable of recovering the energy emitted by the illuminator (52) and subtended to angles (θ1,θ2) respectively comprised between two first straight lines (r1,r2), passing through said focus (F1) and the extremes of said reflector (13') of the parabolic type, and second straight lines (r3,r4), passing through said focus (F1) and respective extremes of the area of said powder bed (6) to be pre- and/or post-heated.

2. Method for pre- and/or post-heating metal powders in an additive manufacturing process, comprising the steps of:
- emitting light beams having a wavelength in the range of 300 to 1,000 nm by means of a pre- and/or post-heating apparatus provided with at least one illuminator (52);
- directing said light beams towards a powder bed (6), so as to concentrate them evenly on an area of said powder bed (6) to be pre- and/or post-heated, wherein said illuminator comprises a reflector (13) of the Compound Elliptical Concentrator (CEC) type, which comprises two ellipses (e1,e2), and at least one of said two foci (R1,R2;S1,S2) of said two ellipses (e1,e2) is made to coincide with respective extremes of said area of said powder bed (6) to be pre- and/or post-heated, or wherein a reflector (13') of the parabolic type having a focus (F1) is associated with said illuminator, which is equipped with two further reflectors (15,16), preferably cylindrical ones, capable of recovering the energy emitted by the illuminator (52) and subtended to angles (θ1,θ2) respectively comprised between two first straight lines (r1,r2), passing through said focus (F1) and the extremes of said parabolic reflector (13'), and second straight lines (r3,r4), passing through said focus (F1) and respective extremes of the area of said powder bed (6) to be pre- and/or post-heated.

## Patentansprüche

1. Vorrichtung zum Vor- und/oder Nachwärmen von Metallpulvern bei einem Additivherstellungsverfahren, wobei die Vorrichtung mit mindestens einem Beleuchtungskörper (52) bereitgestellt ist, der Lichtstrahlen emittiert, die eine Wellenlänge im Bereich von 300 bis 1000 nm aufweisen, die auf ein Pulverbett (6) gerichtet sind, um so die Lichtstrahlen gleichmäßig auf einen Bereich des vor- und/oder nachzuwärmenden Pulverbetts (6) zu konzentrieren, wobei ein Reflektor (13) vom Typ eines Compound Elliptical Concentrators (CEC) mit dem Beleuchtungskörper assoziiert ist, der zwei Ellipsen (e1, e2) aufweist, die entsprechende Brennpunkte (R1, R2; S1, S2) aufweisen, wobei mindestens einer der zwei Brennpunkte (R1, R2; S1, S2) der Ellipsen (e1, e2) mit entsprechenden Extremen des Bereichs des vor- und/oder nachzuwärmenden Pulverbetts (6) zusammenfallen, oder wobei ein Reflektor (13') von einem parabolischen Typ, der einen Brennpunkt (F1) aufweist, mit dem Beleuchtungskörper assoziiert ist, der mit zwei weiteren Reflektoren (15, 16) ausgestattet ist, die vorzugsweise zylindrisch sind, die geeignet sind, Energie zurückzugewinnen, die durch den Beleuchtungskörper (52) emittiert wird und die gegenüberliegend zu Winkeln (θ1, θ2) sind, die entsprechend zwischen zwei ersten geraden Linien (r1,r2), die durch den Brennpunkt (F1) und die Extreme des Reflektors (13') des parabolischen Typs verlaufen, und zweiten geraden Linien (r3,r4), die durch den Brennpunkt (F1) und entsprechende Extreme des Bereichs des vor- und/oder nachzuwärmenden Pulverbetts (6) verlaufen, enthalten sind.

2. Verfahren zum Vor- und/oder Nachwärmen von Metallpulvern bei einem Additivherstellungsverfahren, umfassend die Schritte:
- Emittieren von Lichtstrahlen mit einer Wellenlänge im Bereich von 300 bis 1.000 nm mittels einer Vor- und/oder Nachwärmevorrichtung, die mit mindestens einem Beleuchtungskörper (52) bereitgestellt ist;
- Richten der Lichtstrahlen auf ein Pulverbett (6), um sie so gleichmäßig in einem Bereich des vorzuwärmenden und/oder nachzuwärmenden Pulverbetts (6) zu konzentrieren, wobei der Beleuchtungskörper einen Reflektor (13) vom Typ eines Compound Elliptical Concentrators (CEC) umfasst, der zwei Ellipsen (e1, e2) aufweist und mindestens einer der zwei Brennpunkte (R1, R2; S1, S2) der zwei Ellipsen (e1, e2) ausgeführt ist, um mit entsprechenden Extremen des Bereichs des vorzuwärmenden und/oder nachzuwärmenden Pulverbetts (6) zusammenzufallen, oder wobei ein Reflektor (13') von einem parabolischen Typ, der einen Brennpunkt (F1) aufweist, mit dem Beleuchtungskörper assoziiert ist, der mit zwei weiteren Reflektoren (15, 16) ausgestattet ist, die vorzugsweise zylindrisch sind, die geeignet sind, Energie zurückzugewinnen, die durch den Beleuchtungskörper (52) emittiert wird, und die gegenüberliegend zu Winkeln (θ1, θ2) sind, die entsprechend zwischen zwei ersten geraden Linien (r1,r2), die durch den Brennpunkt (F1) und die Extreme des parabolischen Reflektors (13') verlaufen, und zweiten geraden Linien (r3, r4), die durch den Brennpunkt (F1) und entsprechende Extreme des Bereichs des vorzuwärmenden und/oder nachzuwärmenden Pulverbetts (6) verlaufen, enthalten sind.

## Revendications

1. Appareil pour préchauffer et/ou post-chauffer des poudres métalliques dans un procédé de fabrication additive, ledit appareil comportant au moins un dispositif d'éclairage (52) émettant des faisceaux lumineux, ayant une longueur d'onde comprise dans la plage allant de 300 à 1000 nm, lesquels sont dirigés vers un lit de poudre (6) de façon à concentrer lesdits faisceaux lumineux de manière uniforme sur une région dudit lit de poudre (6) devant être préchauffée et/ou post-chauffée, un réflecteur (13) du type concentrateur elliptique composé (CEC) étant associé audit dispositif d'éclairage, lequel comprend deux ellipses (e1, e2) ayant des foyers respectifs (R1, R2 ; S1, S2), au moins l'un desdits deux foyers (R1, R2 ; S1, S2) desdites ellipses (e1, e2) coïncidant avec des extrêmes respectifs de ladite région dudit lit de poudre (6) devant être préchauffée et/ou post-chauffée, ou un réflecteur (13') du type parabolique ayant un foyer (F1) étant associé audit dispositif d'éclairage, lequel est équipé de deux réflecteurs supplémentaires (15, 16), de préférence des réflecteurs cylindriques, capables de récupérer l'énergie émise par le dispositif d'éclairage (52) et sous-tendus à des angles (θ1, θ2) respectivement compris entre deux premières lignes droites (r1, r2), passant par ledit foyer (F1) et les extrêmes dudit réflecteur (13') du type parabolique, et deux secondes lignes droites (r3, r4), passant par ledit foyer (F1) et des extrêmes respectifs de la région dudit lit de poudre (6) devant être préchauffée et/ou post-chauffée.

2. Procédé pour préchauffer et/ou post-chauffer des poudres métalliques dans un procédé de fabrication additive, comprenant les étapes :
- émettre des faisceaux lumineux ayant une longueur d'onde comprise dans la plage allant de 300 à 1000 nm au moyen d'un appareil de préchauffage et/ou post-chauffage comportant au moins un dispositif d'éclairage (52) ; et
- diriger lesdits faisceaux lumineux vers un lit de poudre (6), de façon à les concentrer de manière uniforme sur une région dudit lit de poudre (6) devant être préchauffée et/ou post-chauffée, ledit dispositif d'éclairage comprenant un réflecteur (13) du type concentrateur elliptique composé (CEC), lequel comprend deux ellipses (e1, e2), et au moins l'un desdits deux foyers (R1, R2 ; S1, S2) desdites deux ellipses (e1, e2) étant amené à coïncider avec des extrêmes respectifs de ladite région dudit lit de poudre (6) devant être préchauffée et/ou post-chauffée, ou un réflecteur (13') du type parabolique ayant un foyer (F1) étant associé audit dispositif d'éclairage, lequel est équipé de deux réflecteurs supplémentaires (15, 16), de préférence des réflecteurs cylindriques, capables de récupérer l'énergie émise par le dispositif d'éclairage (52) et sous-tendus à des angles (θ1, θ2) respectivement compris entre deux premières lignes droites (r1, r2), passant par ledit foyer (F1) et les extrêmes dudit réflecteur parabolique (13'), et deux secondes lignes droites (r3, r4), passant par ledit foyer (F1) et des extrêmes respectifs de la région dudit lit de poudre (6) devant être préchauffée et/ou post-chauffée.
